(19) Europäisches Patentamt

European Patent Office

Office européen des brevets

(11) **EP 0 671 605 B1**

(12) **EUROPÄISCHE PATENTSCHRIFT**

(45) Veröffentlichungstag und Bekanntmachung des Hinweises auf die Patenterteilung:
**07.11.2001 Patentblatt 2001/45**

(51) Int Cl.$^7$: **G01D 5/16**, G01D 5/244

(21) Anmeldenummer: **95200526.2**

(22) Anmeldetag: **03.03.1995**

(54) **Winkelsensor**

Angle sensor

Capteur d'angles

(84) Benannte Vertragsstaaten:
**DE FR GB**

(30) Priorität: **10.03.1994 DE 4408078**

(43) Veröffentlichungstag der Anmeldung:
**13.09.1995 Patentblatt 1995/37**

(73) Patentinhaber:
- **Philips Corporate Intellectual Property GmbH**
  **52064 Aachen (DE)**
  Benannte Vertragsstaaten:
  **DE**
- **Koninklijke Philips Electronics N.V.**
  **5621 BA Eindhoven (NL)**
  Benannte Vertragsstaaten:
  **FR GB**

(72) Erfinder:
- **Muth, Michael**
  **D-20097 Hamburg (DE)**
- **Graeger, Volker, Dr.**
  **D-20097 Hamburg (DE)**
- **Petersen, August**
  **D-20097 Hamburg (DE)**

(74) Vertreter: **Hartmann, Heinrich, Dipl.-Ing. et al**
**Philips Corporate Intellectual Property GmbH,**
**Habsburgerallee 11**
**52064 Aachen (DE)**

(56) Entgegenhaltungen:
EP-A- 0 317 776          EP-A- 0 479 023
DE-A- 3 126 047          US-A- 4 791 366

- **MOHAMMED S. GHAUSI: "Electronic Devices and Circuits - Discrete and Integrated" 1985 , CBS COLLEGE PUBLISHING , NEW YORK, NY, USA XP002010073 * Seite 439; Abbildung 9.50 ***
- **PATENT ABSTRACTS OF JAPAN Bd. 7, Nr. 142 (P-205) 22 Juni 1983 & JP 58 055 814 A (SHIN NIPPON DENKI KK) 02 April 1983**

**Beschreibung**

Die Erfindung bezieht sich auf einen Winkelsensor mit mindestens zwei berührungslos messenden und winkelversetzt zueinander angeordneten Sensoreinheiten, deren Sensorspannungen gleichartige aber winkelversetzt verlaufende sinusartige Funktionen (Sensorkennlinie) des zu messenden Winkeis $\alpha$ gegenüber einen drehbaren Element sind, und mit einer Auswerteschaltung zur Bildung einer ein Maß für den Winkel $\alpha$ bildenden Winkelsensorspannung.

Ein derartiger Winkelsensor ist in der EP-A 217 478 beschrieben. Dort werden von den Sensoreinheiten Wechselspannungssignale mit drehwinkelabhängiger Amplitude gebildet.

Durch die DE-C 3 826 408 ist ein Drosselklappen-Winkelsensor in Verbrennungsmotoren mit einem einzigen magnetoresistiven Sensorelement bekannt, welches eine zeitlich konstante Spannung bildet, die sinusartig vom Meßwinkel abhängt.

Durch die englischsprachige Kurzfassung von JP-A 59-41882 ist eine Sensorbaugruppe aus zwei zueinander verschachtelten magnetoresistiven Sensoreinheiten bekannt, deren Brückenelemente abwechselnd aufeinander folgen.

Der Erfindung liegt die Aufgabe zugrunde, einen Winkelsensor der eingangs genannten Art derart zu gestalten, daß sich bei geringem analogen Schaltungsaufwand in einem weiten Winkelbereich eine monoton und möglichst linear vom zu messenden Winkel abhängige Winkelsensorspannung ergibt. Die Lösung gelingt dadurch, daß die Sensorspannungen zeitlich konstante Gleichspannungen sind, daß die Auswerteschaltung Begrenzerschaltungen enthält, an deren Eingang die Sensorspannungen angeschlossen sind und deren Ausgangsspannungen bei Überschreitung eines Grenzwerts der Sensorspannungen konstant bleibende Werte aufweisen, und daß die Ausgangsspannungen der Begrenzerschaltungen zur Bildung der Winkelsensorspannung an den Eingang einer Summierschaltung gelegt sind.

Durch die aufeinanderfolgende Überlagerung von in Abhängigkeit des Winkels mit einer Rampe auf einen Grenzwert ansteigenden Teilspannungen erhält man einen großen Linearitätsbereich der Winkelsensorspannung und/oder einen erweiterten Winkelmeßbereich.

Vorzugsweise wird man zwei Sensoreinheiten vorsehen, deren Sensorkennlinien um $\pi/2$ winkelversetzte sinusartige Funktionen sind. Es ist aber auch möglich, mehr als zwei Sensoreinheiten vorzusehen, welche in jeweils gleichem Winkelabstand zueinander angeordnet sind.

Je größer die Anzahl der verfügbaren gegeneinander versetzten Sensorkennlinien ist, um so genauer läßt sich in einem vorgegebenen Meßbereich die Linearität der Kennlinie der Winkelsensorspannung oder aber ein größerer Meßbereich erzielen.

Bei einer bevorzugten Lösung ist vorgesehen, daß zumindest eine lineare Kombination der Sensorspannungen zur Bildung einer indirekten Sensorspannung derart vorgesehen ist, daß sich eine indirekte Sensorkennlinie ergibt, welche gegenüber den direkten Sensorkennlinien winkelversetzt verläuft, und daß die indirekte Sensorspannung an eine weitere Begrenzerschaltung angeschlossen ist, deren Ausgangsspannung an den Eingang der Summierschaltung angeschlossen ist. Dabei wird eine vorteilhafte Vergrößerung der Anzahl der verfügbaren Sensorkennlinien durch die Bildung mindestens einer indirekten Sensorkennlinie erreicht, welche jeweils durch Kombination der direkten Sensorkennlinien gebildet werden.

Vorzugsweise ist vorgesehen, daß eine Mehrzahl von indirekten Sensorspannungen gebildet ist, welche gemeinsam mit den direkten Sensorkennlinien indirekte Sensorkennlinien bilden, welche in regelmäßigen Abständen winkelversetzt zueinander verlaufen, und daß sämtliche direkten und indirekten Sensorspannungen Begrenzerschaltungen zugeführt sind, deren Ausgangsspannungen durch eine Summierschaltung addiert sind.

Man kann auch eine unregelmäßige Verteilung der direkten und indirekten Sensorkennlinien vorsehen, falls z.B. gewisse Bereiche der Kennlinie der Winkelsensorspannung bevorzugt linearisiert werden sollen.

An den Ausgängen der Begrenzerschaltungen entstehen Rampenkennlinien mit einem Proportionalbereich zwischen zwei konstanten Bereichen.

Gemäß einer einfachen Ausführungsform ist vorgesehen, daß die zwischen den auf konstante Werte begrenzten Bereichen liegenden Proportionalbereiche der Sensorkennlinie im wesentlichen unmittelbar aneinander anschließen.

Infolge von Toleranzen kann der Übergang von einem Proportionalbereich auf den folgenden entweder bei einem zu kleinen oder zu großen Winkel erfolgen, so daß in dem Übergangsbereich waagerechte oder zu steile Verläufe der Kennlinie der Winkelsensorspannung resultieren. Solche Auswirkungen können dadurch abgeschwächt werden, daß mindestens zwei, vorzugsweise mindestens drei Proportionalbereiche einander über einen Winkelbereich überlappen.

Eine Vergrößerung des Winkelmeßbereichs kann man dadurch erreichen, daß Schaltungsmaßnahmen vorgesehen sind, welche den konstant bleibenden Bereich der Ausgangsspannungen der Begrenzerschaltungen bei der Entfernung vom Proportionalbereich auch bei Unterschreitung der Grenzwerte der Sensorspannung aufrechterhalten.

Für die Erfindung sind magnetorestistive Sensoreinheiten besonders geeignet, welche jeweils aus vier Brückenelementen bestehen. Ein winkelversetzt gleichartiges Verhalten von zwei oder mehreren solcher Sensoreinheiten wird bei geringem Aufwand für ein beaufschlagendes Magnetsystem dadurch erreicht, daß die Brückenelemente der Sensoreinheiten in abwechselnder Folge ringförmig um einen Mittelpunkt angeordnet sind.

Die Erfindung wird anhand von in der Zeichnung dargestellten Ausführungsbeispielen näher erläutert.

Fig. 1     zeigt einen Chip mit zwei verschachtelten Sensoreinheiten,

Fig. 2     zeigt den prinzipiellen Verlauf einer Sensorkennlinie und einer abgeleiteten Rampenkennlinie,

Fig. 3     zeigt die relative Lage zweier direkter und mehrerer davon abgeleiteter indirekter Sensorkennlinien,

Fig. 4     zeigt aus den Sensorkennlinien nach Fig. 3 gebildete Rampenkennlinien,

Fig. 5     zeigt eine Blockschaltung zur erfindungsgemäßen Bildung der winkelabhängigen Kennlinie der Winkelsensorspannung aus zwei Sensorspannungen,

Fig. 6     zeigt ein detailliertes Schaltungsbeispiel bei Verwendung von 14 Sensorkennlinien.

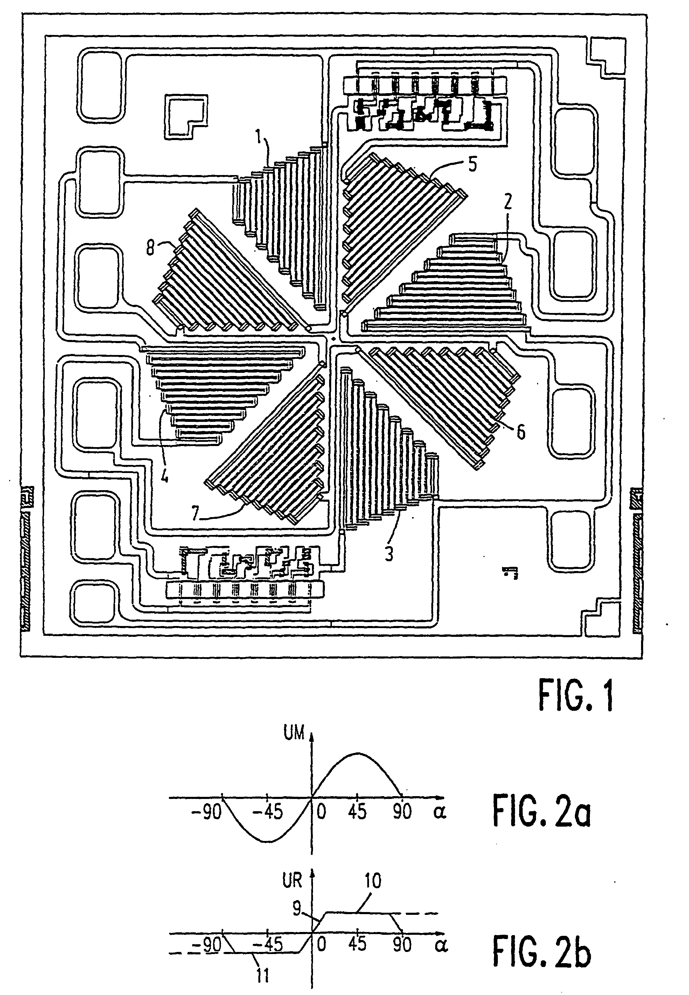

Auf dem in Fig. 1 dargestellten Chip sind zwei Sensoreinheiten mit Brückenelementen 1,2,3 und 4 bzw. 5,6,7 und 8 ineinander verschachtelt. Auf ein Brückenelement der einen Sensoreinheit folgt jeweils ein Brückenelement der anderen Sensoreinheit mit 45° räumlicher Verschiebung um einen gemeinsamen Mittelpunkt.

Jede Sensoreinheit bildet eine zeitlich konstante Meßspannung UM, die in Abhängigkeit des Winkels $\alpha$ gemäß Fig. 2a sinusartig mit einer Periode von 180° verläuft. Erfindungsgemäß wird aus einer Sensorkennlinie nach Fig. 2a eine Rampenkennlinie nach Fig. 2b gebildet, welche einen Proportionalbereich 9 zwischen zwei konstanten Bereichen 10 und 11 aufweist. Der voll ausgezogene Verlauf ist ausreichend, falls nicht zu große Winkelmeßbereiche erfaßt werden müssen. Falls jedoch in einem großen Winkelbereich eine genügend genaue und lineare Messung des Winkels erforderlich ist, muß durch geeignete Schaltungsmaßnahmen dafür gesorgt werden, daß die konstanten Bereiche 10, 11 nach rechts bzw. links verlängert werden, wie es gestrichelt angedeutet ist.

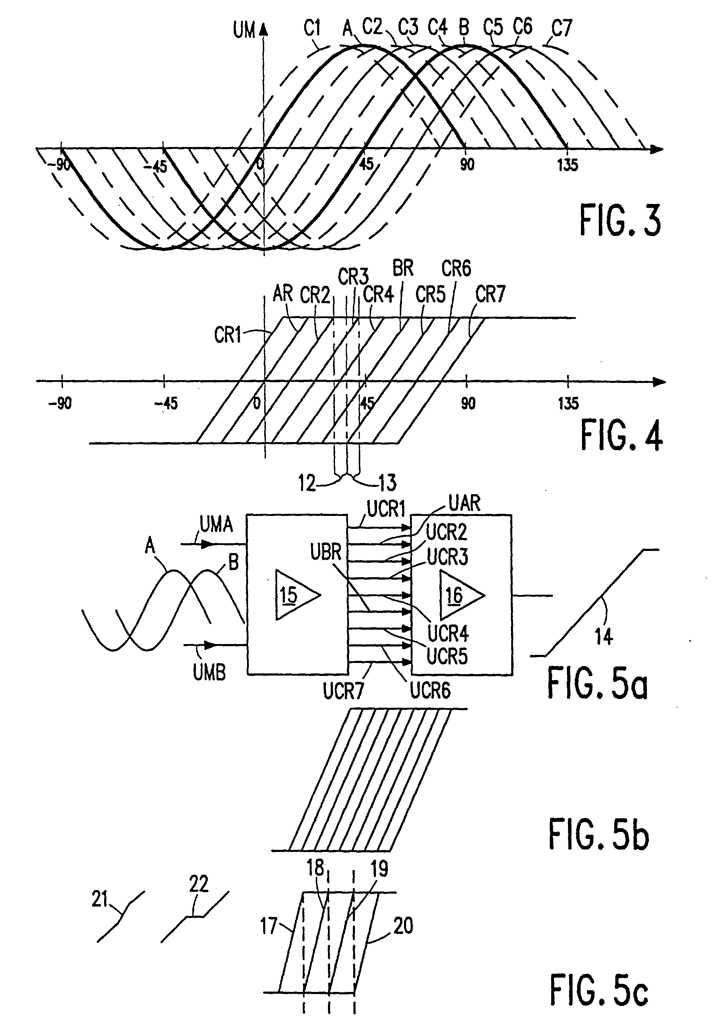

Die Sensoreinheiten nach Fig. 1 liefern Sensorkennlinien A und B nach Fig. 3 als direkte Sensorkennlinien. Indirekte Sensorkennlinien C 1 bis C 7 sind durch lineare Kombinationen der direkten Sensorkennlinien A und B derart gebildet, daß sämtliche Kennlinien bei gleicher Amplitude mit gleichmäßigem Winkelversatz aufeinander folgen. Die Spannung UMCx einer Kennlinie Cx wird durch gewichtete Addition der Meßspannungen UMA und UMB der Kennlinien A und B erhalten:

$$UMCx = (ax \cdot UMA + bx \cdot UMB)/\sqrt{ax^2 + bx^2}$$

Für die Kennlinie C3 sind die Gewichtungsfaktoren ax und bx gleich.

Mit geeigneten Schaltungselementen lassen sich aus den direkten und indirekten Sensorkennlinien nach Fig. 3 zugehörige Rampenkennlinien AR, BR sowie CR1 bis CR7 nach Fig. 4 bilden. Diese Rampenkennlinien müssen zur Bildung der resultierenden Kennlinie der Winkelsensorspannung addiert werden. Dann ergeben sich im Wechsel unterschiedliche Bereiche 12 und 13 in welchen entweder 3 oder 4 Proportionalbereiche überlagert sind. Die dann verbleibenden geringen Steigungsschwankungen der Kennlinie der Winkelsensorspannung können im Rahmen zulässiger Toleranzen hingenommen werden.

Fig. 5a zeigt eine entsprechende Blockschaltung zur Bildung der resultierenden Winkelsensorkennlinie 14 aus den ursprünglichen Sensorkennlinien A und B der Sensoreinheiten nach Fig. 1. In der Wandlerschaltung 15 werden Spannungen UMA und UMB gemäß den Kennlinien A und B zu Spannungen UCR1 bis UCR7 entsprechend den Kennlinien CR1 bis CR7 nach Fig. 4 umgewandelt, wie es auch in Fig. 5b angedeutet ist.

Durch die Summierschaltung 16 wird als Summenspannung die resultierende Winkelsensorkennlinie 14 erhalten.

Bei einer vereinfachten Lösung können in der Wandlerschaltung weniger, beispielsweise 4 Rampenkennlinien 17,18,19 und 20 nach Fig. 5c gebildet werden, wobei deren Proportionalbereiche ohne Überlagerung und ohne Winkelabstand aufeinanderfolgen. Dabei ist jedoch wegen unvermeidbarer Fertigungstoleranzen nicht zu verhindern, daß ein folgender Proportionalbereich entweder bei einem kleinen oder bei einem zu großen Winkel einsetzt. Im erstgenannten Fall entstehen Bereiche 21 mit zu hoher Steigung, im letztgenannten Fall Bereiche 22 ohne Steigung in der Winkelsensorkennlinie.

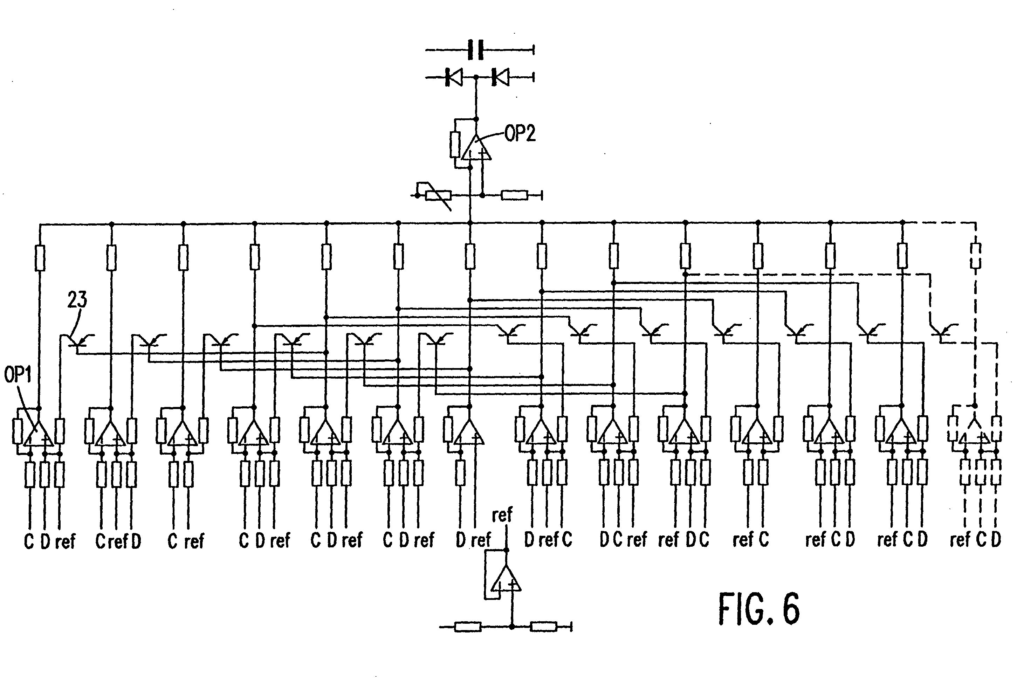

Fig. 6 zeigt ein Schaltbild für den Fall der Bildung und Überlagerung von insgesamt 14 Rampenkennlinien. Jeder Rampenkennlinie ist ein Operationsverstärker OP1 zugeordnet, wobei mit C und D die Sensorspannungen der Sensoreinheiten und mit ref eine Referenzspannung bezeichnet sind. Mit Widerstandskombinationen werden anhand der Beschreibung von Fig. 1 erläuterte Faktoren ax und bx vorgegeben. Dioden 23 bewirken, daß die Rampenkennlinien entsprechend den gestrichelten Bereichen nach Fig. 2b über einen verlängerten Bereich konstant verlaufen.

Durch den summierenden Operationsverstärker OP2 werden die 14 Rampenkennlinien überlagert. Mit der Strichelung des untersten Schaltelements für die 14. Rampenkennlinie ist angedeutet, daß in analogiger Weise eine beliebige Anzahl von Rampenkennlinien gebildet werden kann. Die dann mögliche Verbesserung der Linearität und/oder des Meßbereichs der Kennlinie der Winkelsensorspannung ist natürlich mit einem höheren Schaltungsaufwand verbunden, welcher jedoch bei Ausführung als integriertes Schaltungselement tragbar ist.

**Patentansprüche**

1. Winkelsensor mit mindestens zwei berührungslos messenden und winkelversetzt zueinander angeordneten Sensoreinheiten, deren Sensorspannungen gleichartige aber winkelversetzt verlaufende sinusartige Funktionen (Sensorkennlinie) des zu messenden Winkels $\alpha$ gegenüber einen drehbaren Element sind, und mit einer Auswerteschaltung zur Bildung einer ein Maß für den Winkel $\alpha$ bildenden Winkelsensorspannung, **dadurch gekennzeichnet, daß** die Sensorspannungen zeitlich konstante Gleichspannungen sind, daß die Auswerteschaltung Begrenzerschaltungen (15) enthält, an deren Eingang die Sensorspannungen (UMA,UMB) angeschlossen sind und deren Ausgangsspannung bei Überschreitung eines Grenzwerts der Sensorspannungen konstant bleibende Werte (10,11) aufweisen, und daß die Ausgangsspannungen der Begrenzerschaltungen (15) zur Bildung der Winkelsensorspannung an den Eingang einer Summierschaltung (16) gelegt sind.

2. Winkelsensor nach Anspruch 1, **dadurch gekennzeichnet, daß** zumindest eine lineare Kombination der Sensorspannungen zur Bildung einer indirekten Sensorspannung derart vorgesehen ist, daß sich eine indirekte Sensorkennlinie ergibt, welche gegenüber den direkten Sensorkennlinien winkelversetzt verläuft, und daß die indirekte Sensorspannung an eine weitere Begrenzerschaltung (15) angeschlossen ist, deren Ausgangsspannung an den Eingang der Summierschaltung (16) angeschlossen ist.

3. Winkelsensor nach Anspruch 2, **dadurch gekennzeichnete daß** eine Mehrzahl von indirekten Sensorspannungen gebildet ist, welche gemeinsam mit den direkten Sensorkennlinien indirekte Sensorkennlinien bilden, welche in regelmäßigen Abständen winkelversetzt zueinander verlaufen, und daß sämtliche direkten und indirekten Sensorspannungen Begrenzerschaltungen zugeführt sind, deren Ausgangsspannungen durch eine Summierschaltung addiert sind.

4. Winkelsensor nach einem der Ansprüche 1 bis 3, **dadurch gekennzeichnet, daß** die zwischen den auf konstante Werte begrenzten Bereichen liegenden Proportionalbereiche der Sensorkennlinie im wesentlichen unmittelbar aneinander anschließen.

5. Winkelsensor nach einem der Ansprüche 1 bis 3, **dadurch gekennzeichnet, daß** mindestens zwei, vorzugsweise mindestens drei Proportionalbereiche einander über einen Winkelbereich überlappen.

6. Winkelsensor nach einem der Ansprüche 1 bis 5, **dadurch gekennzeichnet, daß** Schaltungsmaßnahmen (23) vorgesehen sind, welche den konstant bleibenden Bereich der Ausgangsspannungen der Begrenzerschaltungen (15) bei der Entfernung vom Proportionalbereich auch bei Unterschreitung der Grenzwerte der Sensorspannungen aufrechterhalten.

7. Winkelsensor nach einem der Ansprüche 1 bis 6, **dadurch gekennzeichnet, daß** die Sensoreinheiten magnetorestive Sensoren sind, welche jeweils aus vier Brückenelementen (1 bis 8) bestehen, wobei die Brückenelemente der Sensoren in abwechselnder Folge ringförmig um einen Mittelpunkt angeordnet sind.

**Claims**

1. An angle sensor comprising at least two angularly spaced sensor units which measure in a contactless manner and whose sensor voltages are similar but angularly shifted sinusoidal functions (sensor characteristic) of the angle $\alpha$ to be measured relative to a rotatable element, and also comprising a processing circuit for forming an angle sensor voltage which is a measure of the angle $\alpha$, **characterized in that** the sensor voltages are direct voltages which are constant in time, that the processing circuit comprises limiter circuits (15) whose input receives the sensor voltages (UMA, UMB) and whose output voltages have values (10, 11) which remain constant when a limit value of the sensor voltages is exceeded, and that the output voltages of the limiter circuits (15) are applied to the input of a summing circuit (16) in order to form the angle sensor voltage.

2. An angle sensor as claimed in Claim 1, **characterized in that** at least one linear combination of the sensor voltages is provided to form an indirect sensor voltage in such a manner that there is obtained an indirect sensor characteristic which is angularly shifted relative to the direct sensor characteristics, and that the indirect sensor voltage is applied to a further limiter circuit (15) whose output voltage is applied to the input of the summing circuit (16).

3. An angle sensor as claimed in Claim 2, **characterized in that** there is formed a plurality of indirect sensor voltages which constitute indirect sensor characteristics in conjunction with the direct sensor characteristics, which indirect sensor characteristics extend at regular distances from one another in an angularly shifted manner, all direct and indirect sensor voltages being applied to limiter circuits whose output voltages are added by a summing circuit.

4. An angle sensor as claimed in any one of the Claims 1 to 3, **characterized in that** the proportionality ranges of the sensor characteristic which are situated between the ranges limited to constant values essentially directly adjoin one another.

5. An angle sensor as claimed in one of the Claims 1 to 3, **characterized in that** at least two, but preferably at least three proportionality ranges overlap one another over an angular range.

6. An angle sensor as claimed in one of the Claims 1 to 5, **characterized in that** circuit means (23) are provided which sustain the range of the output voltages of the limiter circuits (15) which remains constant upon moving away from the proportionality range, even when the sensor voltages drop below the limit values.

7. An angle sensor as claimed in one of the Claims 1 to 6, **characterized in that** the sensor units are magnetoresistive sensors, each of which consists of four bridge elements (1 to 8), the bridge elements of the sensors being annularly arranged around a center in an alternating sequence.


**Revendications**

1. Capteur d'angles avec au moins deux unités de capteur disposées dans un décalage angulaire réciproque et mesurant sans contact dont les tensions de capteur sont des fonctions (caractéristique de capteur) sinusoïdales équivalentes mais en décalage angulaire de l'angle α à mesurer par rapport à un élément rotatif et avec un circuit d'évaluation en vue de la formation d'une tension du capteur d'angles formant une mesure pour l'angle α, **caractérisé en ce que** les tensions de capteur sont des tensions continues constantes dans le temps, que le circuit d'évaluation contient des circuits limiteurs (15) à l'entrée desquels sont raccordées les tensions de capteur (UMA, UMB) et dont la tension de sortie présente des valeurs (10, 11) constantes en cas de dépassement d'une valeur limite des tensions de capteur et que les tensions de sortie des circuits limiteurs (15) sont appliquées à l'entrée d'un circuit d'addition (16) en vue de la formation de la tension du capteur d'angle.

2. Capteur d'angles selon la revendication 1, **caractérisé en ce qu'**au moins une combinaison linéaire des tensions de capteur est prévue en vue de la formation d'une tension de capteur indirecte de telle sorte qu'il en résulte une caractéristique de capteur indirecte qui s'étend en décalage angulaire par rapport aux caractéristiques de capteur directes et que la tension de capteur indirecte est raccordée à un circuit limiteur (15) supplémentaire dont la tension de sortie est raccordée à l'entrée du circuit d'addition (16).

3. Capteur d'angles selon la revendication 2, **caractérisé en ce qu'**il est formé une majorité de tensions de capteur indirectes qui forment avec les caractéristiques de capteur directes des caractéristiques de capteur indirectes qui sont disposées en décalage angulaire à intervalles réguliers et que toutes les tensions de capteur directes et indirectes sont amenées à des circuits limiteurs dont les tensions de sortie sont additionnées par un circuit d'addition.

4. Capteur d'angles selon l'une des revendications 1 à 3, **caractérisé en ce que** les zones proportionnelles de la caractéristique du capteur disposées entre les zones limitées à des valeurs constantes se succèdent de manière essentiellement directe.

5. Capteur d'angles selon l'une des revendications 1 à 3, **caractérisé en ce qu'**au moins deux, de préférence au moins trois zones proportionnelles se chevauchent sur une zone angulaire.

6. Capteur d'angles selon l'une des revendications 1 à 5, **caractérisé en ce que** des mesures de circuit (23) sont prévues et maintiennent la zone constante des tensions de sortie des circuits limiteurs (15) en cas d'éloignement de la zone proportionnelle même lorsque les valeurs limites des tensions de capteur ne sont pas atteintes.

7. Capteur d'angles selon l'une des revendications 1 à 6, **caractérisé en ce que** les unités de capteur sont des capteurs magnétorésistifs qui se composent respectivement de quatre éléments de pont (1 à 8), les éléments de pont des capteurs étant disposés circulairement autour d'un point central dans une séquence alternée.

FIG. 1

FIG. 2a

FIG. 2b

UM

C1 A C2 C3 C4 B C5 C6 C7

−90   −45   0   45   90   135

FIG. 3

CR1   AR CR2   CR3   BR   CR6
              CR4   CR5   CR7

−90   −45   0   45   90   135

FIG. 4

12   13

UMA

A

B

UMB

15

UCR1   UAR
       UCR2
UBR    UCR3

16

UCR4
UCR5

UCR7   UCR6

14

FIG. 5a

FIG. 5b

18   19

21   22

17   20

FIG. 5c

FIG. 6